# FASCICULE DE BREVET EUROPEEN

(11) **EP 3 459 095 B1**
(45) Date de publication et mention de la délivrance du brevet: **11.08.2021**
(21) Numéro de dépôt: 17723396.2
(22) Date de dépôt: 15.05.2017
(51) Int. Cl.: H01G 11/36, H01G 11/86, H01G 13/00, H01M 4/04

(54) **PROCEDE DE FABRICATION DE SUPERCONDENSATEUR**
VERFAHREN ZUR HERSTELLUNG EINES SUPERCAPACITORS
METHOD OF MANUFACTURING A SUPERCAPACITOR

(30) Priorité: 20.05.2016 FR 1600808
(43) Date de publication de la demande: 27.03.2019
(73) Titulaire: Thales, 92400 Courbevoie (FR)
(72) Inventeur: BONDAVALLI, Paolo, 91120 Palaiseau (FR)
(74) Mandataire: Marks & Clerk France
(86) Numéro de dépôt international: PCT/EP2017/061597
(87) Numéro de publication internationale: WO 2017/198608

(56) Documents cités:
- WO-A1-2013/096220
- WO-A1-2014/147419
- WO-A1-2014/149898
- WO-A2-2009/035488
- WO-A2-2012/049428
- FR-A1- 2 976 118
- P. BONDAVALLI ET AL: "Supercapacitor Electrode Based on Mixtures of Graphite and Carbon Nanotubes Deposited Using a Dynamic Air-Brush Deposition Technique", JOURNAL OF THE ELECTROCHEMICAL SOCIETY, vol. 160, no. 4, 8 février 2013 (2013-02-08), pages A601-A606, XP055232033, US ISSN: 0013-4651, DOI: 10.1149/2.048304jes

## Description

L'invention concerne les composants pour le stockage de l'énergie, en particulier un procédé de fabrication des condensateurs. Les condensateurs concernés sont également appelés « supercondensateurs », caractérisés par une densité d'énergie plus importante que celle des condensateurs diélectriques et une densité de puissance plus élevée que celle des batteries.

Les supercondensateurs comprennent généralement deux électrodes poreuses imprégnées d'un électrolyte (un sel ionique en solution généralement organique, un sel d'ammonium quaternaire tel que le tétrafluoroborate de tétraéthylammonium dans l'acétonitrile ou le carbonate de propylène par exemple). Ces électrodes sont généralement séparées par une membrane isolante et poreuse permettant la circulation des ions de l'électrolyte.

Les premiers supercondensateurs, dits "EDLC" (acronyme *d' « Electrochemical Double Layer Capacitator* ») se basent sur un principe équivalent à celui des condensateurs conventionnels avec des électrodes polarisables et un électrolyte jouant le rôle de diélectrique. Leur capacité provient de l'organisation d'une double couche d'ions et d'électrons à l'interface électrolyte/électrode. Aujourd'hui, les supercondensateurs combinent, pour le stockage de l'énergie, une composante capacitive issue de l'organisation électrostatique des ions à proximité des électrodes et une composante pseudo-capacitive due à des réactions d'oxydoréduction dans le condensateur.

La composante électrostatique du stockage de l'énergie s'effectue par une distribution non homogène des ions de l'électrolyte au voisinage de la surface de chaque électrode, sous l'effet de la différence de potentiel appliquée entre les deux électrodes. La composante électrostatique du stockage de l'énergie confère une puissance spécifique potentiellement élevée et une très bonne tenue le long des cycles de charge et de décharge.

Des matériaux à très grand rapport entre surface spécifique et volume, possédant une porosité adaptée au stockage ionique à cette échelle, ont été développés pour augmenter la capacité des supercondensateurs. Les méthodes de fabrication de ces matériaux se sont orientées vers l'utilisation de fullerènes, de nanotubes de carbone, du charbon actif, de nanofils de carbone ou CNF et du graphène, qui sont avantageusement légers, peu couteux, et moins toxiques que les matériaux couramment utilisés pour la réalisation des batteries.

Les supercondensateurs pourraient remplacer les condensateurs classiques pour des applications à forte demande en énergie, présentant notamment des températures extrêmes, des vibrations, des accélérations importantes ou une forte salinité. Dans ces milieux, les batteries ne peuvent pas fonctionner sans que leur durée de vie soit fortement limitée (ces conditions s'appliquent aux radars, au sport automobile, à l'avionique électrique et aux applications militaires par exemple).

Les supercondensateurs sont principalement appliqués aux systèmes qui requièrent des pics d'énergie sur des temps courts (c'est-à-dire de fortes puissances), de l'ordre de la minute, pour des phases d'accélération des véhicules dans le transport terrestre (automobiles, tramways, autobus, dispositifs dits « stop and start » dans lesquels l'énergie est récupérée au cours de la décélération).

Les supercondensateurs pourraient être également utiles pour la gestion de l'électricité dans les systèmes embarqués, pour la sécurisation des installations électriques, la sécurisation de l'alimentation en énergie de systèmes sensibles (postes de radio, systèmes de surveillance, domaine militaire, centre de données), dans les réseaux de capteurs autonomes pour des applications de surveillance de sites industriels, complexes ou sensibles (hôpitaux, avionique, plateforme off-shore, prospection pétrolière, applications sous-marines) et enfin dans les énergies renouvelables (éoliennes, récupération de l'énergie électrique atmosphérique).

Pour permettre une application industrielle, la densité d'énergie et la puissance des supercondensateurs doivent être optimisées. De plus, la résistance interne d'un supercondensateur est aujourd'hui trop élevée et mal maitrisée. Les supercondensateurs habituels sont constitués de carbones activés avec des distributions inhomogènes et non optimisées de la taille des pores et utilisent un liant polymérique pour assurer la tenue mécanique de leur structure. Ce liant augmente la résistance électrique interne du condensateur et augmente son poids désavantageusement. De plus, ce liant se dégrade avec le temps et pollue l'électrolyte en dégradant les performances du supercondensateur. La porosité inadaptée impose également une résistance au transfert ionique au sein du matériau actif.

La publication de Bondavalli, P., Delfaure, C., Legagneux, P., Pribat, D., 2013, « Supercapacitor electrode based on mixtures of graphite and carbon nanotubes deposited using a dynamic air-brush deposition technique. », Journal of The Electrochemical Society, 160(4), A601-A606, divulgue un procédé de dépôt de nano-/microparticules de graphène et de nanotubes de carbone par pulvérisation hydrodynamique d'une suspension sur un support. Ce procédé permet la fabrication de supercondensateurs atteignant de fortes densités d'énergie et de puissance, sans utiliser de liant polymérique, mais nécessite l'utilisation de solvants toxiques et polluants, tels que la N-méthyl-2-pyrrolidone (NMP) pour permettre la suspension des nano-/microparticules. Les solvants utilisés sont pourtant adaptés à suspendre ce type de micro-/nanoparticules.

La publication de Bondavalli *et al.* divulgue également la fabrication de collecteurs sur des surfaces de l'ordre du cm². La pulvérisation est réalisée à l'aide d'une buse pulvérisant une suspension composée de plusieurs types de micro-/nanoparticules mélangées. Pour couvrir une surface, le substrat est fixe, et le jet de pulvérisation d'une buse peut être déplacé dans un plan de manière à couvrir une surface en ajustant la trajectoire du jet de manière à avoir un dépôt le plus uniforme possible en micro-/nanoparticules.

L'évaporation de solvants toxiques, comme la NMP, peut être encadrée dans le laboratoire lors d'une production de petites surfaces, en réalisant par exemple le dépôt sous une hotte. Le traitement des émanations toxiques pose un problème technique si le débit de production des collecteurs, électrodes ou condensateurs devient industriel.

La réalisation d'un supercondensateur peut nécessiter le dépôt de plusieurs couches de compositions en micro-/nanoparticules différentes. En utilisant la technique divulguée dans Bondavalli *et al.,* la buse doit être changée ou nettoyée lors de chacune des étapes de dépôt de micro-/nanoparticules différentes, ou de couches dont les compositions en micro-/nanoparticules sont différentes.

Les buses sont aussi sujettes au bouchage. Les concentrations en micro-/nanoparticules peuvent être élevées lors d'une pulvérisation réalisée dans les conditions décrites par Bondavalli *et al.* : le bouchage pose un problème de maintenance lors d'une utilisation industrielle de cette méthode pour la production de collecteurs, électrodes ou supercondensateurs.
Le document WO2013/096220 décrit un procédé de fabrication d'un super condensateur en pulvérisant un mélange de poudre électro-active.

L'invention vise à remédier aux inconvénients précités de l'art antérieur, et plus particulièrement à produire des collecteurs, électrodes et/ou supercondensateurs avec un débit industriel en utilisant les résultats de Bondavalli *et al.* obtenus par pulvérisation de suspensions, sans nécessiter l'évaporation de quantités industrielles de solvants toxiques.

Un objet de l'invention permettant d'atteindre ce but est un procédé de fabrication d'un supercondensateur comprenant un substrat flexible, ledit procédé comprenant au moins les étapes consistant à :
- dérouler ledit substrat flexible d'un premier rouleau ;
- pulvériser une pluralité de suspensions comprenant des micro-/nanoparticules suspendues dans un solvant, lesdites suspensions étant pulvérisées par une pluralité de buses formant des jets de gouttes de dites suspension définissant une zone d'espace, dite zone de dépôt, la composition en dites micro/ nanoparticules d'une dite suspension pulvérisée est différente de la composition en dite micro/nanoparticules d'au moins une autre dite suspension pulvérisée à ;
- transporter au moins une partie dudit substrat flexible au travers d'une zone de dépôt de micro-/nanoparticules, selon une direction de transport dudit substrat flexible, l'interaction de ladite zone de dépôt et dudit substrat flexible formant une zone d'impact ;
- chauffer ledit substrat flexible, pendant chaque pulvérisation, de manière à promouvoir l'évaporation complète dudit solvant desdites suspensions pulvérisées sur ledit substrat flexible ;
ledit procédé étant caractérisé en ce qu'un ensemble d'au moins deux buses pulvérise simultanément au moins deux suspensions sensiblement sur la même zone d'impact.

Avantageusement, le procédé comporte une étape additionnelle consistant à enrouler ledit substrat flexible autour d'un second rouleau.

Avantageusement, le procédé comporte au moins une étape consistant à échanger la position de chacune desdites buses d'un premier groupe de dites buses avec la position de chacune desdites buses d'un second groupe de dites buses.

Avantageusement, ledit substrat flexible est localement plan dans ladite zone d'impact, suivant un plan principal, et au moins trois dites buses sont agencées dans un plan parallèle et différent dudit plan principal.

Avantageusement, l'ensemble desdites buses sont agencées selon une matrice, comportant des lignes et des colonnes, ladite zone d'impact d'une dite ligne étant sensiblement transversale à la direction de transport dudit substrat flexible.

Avantageusement, au moins une dite ligne pulvérise desdites suspensions de même composition en dites micro-/nanoparticules, et de composition différente d'au moins une autre dite ligne.

Avantageusement, la composition en dites micro-/nanoparticules desdites suspensions est périodique en fonction desdites lignes.

Avantageusement, ledit substrat flexible est plan, suivant un plan principal, et lesdites buses sont agencées autour d'au moins un manège, un axe de révolution étant commun à chacun des dits manèges, ledit axe de révolution étant sensiblement parallèle audit plan principal et sensiblement normal à ladite direction de transport dudit substrat flexible, ledit procédé comprenant au moins une étape consistant à pivoter au moins un dit manège autour dudit axe de révolution.

Avantageusement, deux dites buses dudit ensemble pulvérisent des dites suspensions de micro-/nanoparticules de même composition en micro-/nanoparticules et en solvant selon un angle différent, recouvrant sensiblement la même dite zone d'impact de manière sensiblement homogène.

Avantageusement, le procédé comporte une étape additionnelle dans laquelle on chauffe ledit substrat flexible, pendant chaque pulvérisation, de manière à promouvoir l'évaporation complète dudit ou desdits solvant desdites suspensions pulvérisées sur ledit substrat flexible à une température inférieure ou égale à une fois et demie la température d'ébullition de chaque dit solvant et inférieure ou égale à 200 degrés Celsius ;

Avantageusement, lesdites micro-/nanoparticules comprennent des feuilles de graphène.

Avantageusement, on oxyde au moins une partie des micro-/nanoparticules avant de les suspendre dans un dit solvant.

Avantageusement, on suspend, avant une pulvérisation, lesdites micro-/nanoparticules dans un dit solvant composé à plus de 95% d'eau (H₂O) en masse et préférentiellement à plus de 99% d'eau en masse.

Avantageusement, lesdites micro-/nanoparticules sont choisies parmi des nanotubes de carbone, des nanofils de carbone, des nanotiges de carbone, des nanocornes de carbone, des oignons de carbone et un mélange de ces micro-/nanoparticules, dans lequel on oxyde lesdites micro-/nanoparticules avant de les pulvériser et dans lequel on recuit ledit dépôt après ladite pulvérisation à une température suffisante pour désoxyder lesdites micro-/nanoparticules.

Avantageusement, on mesure l'épaisseur de dites micro-/nanoparticules déposées pendant ou après le dépôt de dites micro-/nanoparticules.

Un autre objet de l'invention est une électrode comprenant un dit substrat flexible, ledit substrat flexible étant recouvert d'un dépôt de micro-/nanoparticules, ledit dépôt de dites nano-/microparticules étant susceptible d'être obtenu par un procédé selon l'une des revendications précédentes.

Un autre objet de l'invention est un supercondensateur comportant au moins une dite électrode.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés. Par souci de clarté, les mêmes éléments porteront les mêmes repères dans les différentes figures.

Par « zone de dépôt » 5 de micro-/nanoparticules 4, on entend un volume formé par l'ensemble des gouttelettes elles-mêmes formées par pulvérisation d'une suspension 7 par une buse 9.

Par « zone d'impact » 17, on entend une surface du substrat flexible 1 en intersection avec la zone de dépôt 5 : les gouttes ou gouttelettes formées par pulvérisation d'une suspension 7 par une buse 9 sont transportées dans la zone de dépôt 5 jusqu'à rentrer en contact avec le substrat flexible 1 sur la zone d'impact 17.

Par « flexible », on entend une caractéristique d'un matériau dont les propriétés mécaniques lui permettent d'être enroulé.

Par « nanoparticule », on entend des particules dont au moins la plus petite des dimensions est nanométrique, c'est-à-dire comprise entre 0,1 nm et 100 nm. Par « microparticule », on entend des particules dont au moins la plus petite des dimensions est micrométrique, c'est-à-dire comprise entre 0,1 µm et 100 µm.

Les géométries de nano-/microparticules comprennent les nano-/microfils, les nano-/microtiges, les nano-/microtubes, les nano-/microcornes, les nano-/micro oignons et les nano-/microfeuilles du type monofeuillet comprenant une couche cristalline ou multifeuillet comprenant plusieurs feuillets empilés. Un nano-/microtube est formé d'une ou plusieurs nano-/microfeuilles enroulées. Un nano-/microfil est un objet unidimensionnel plein d'un matériau massif. Une nano-/microtige est un objet unidimensionnel creux.

Dans le cas du carbone, un feuillet est désigné par le terme «graphène» et se présente sous la forme d'un cristal bidimensionnel de carbone d'épaisseur monoatomique et de dimension nano-/micrométrique. Les nanotubes de carbone sont connus et formés d'un feuillet de graphène enroulé en un tube (désigné par l'acronyme de « Single Wall Carbone NanoTube », SWCNT) ou de plusieurs feuillets empilés de graphène enroulés en un tube (désigné par l'acronyme de « Multi Wall Carbone NanoTube », MWCNT).

Par « électrode » on entend un ensemble comportant un dépôt de nano-/microparticules sur un substrat (comportant un collecteur de courant qui conduit électriquement et optionnellement une couche ou un matériau épais pour la résistance mécanique de l'électrode).

Par "microgouttes", on entend des gouttes de taille d'ordre microscopique, dont le diamètre est compris entre environ 1 et 100 micromètres.

L'invention sera mieux comprise et d'autres avantages, détails et caractéristiques de celle-ci apparaîtront au cours de la description explicative qui suit, faite à titre d'exemple en référence aux dessins annexés dans lesquels :
- la figure 1 est une représentation schématique d'un système adapté à la réalisation d'un supercondensateur suivant un procédé conforme à l'invention ;
- la figure 2 illustre schématiquement un agencement de buses utilisé lors de la mise en œuvre d'un procédé selon l'invention ;
- la figure 3 illustre schématiquement l'agencement de buses autour de manèges, dans la mise en œuvre d'un procédé selon l'invention ;
- la figure 4 illustre schématiquement la pulvérisation d'une suspension 7 par deux buses 9 sur sensiblement la même zone d'impact 17 ;
- La figure 5 est une photographie obtenue par un microscope électronique à balayage de la structure du matériau d'un dépôt réalisé avec une suspension 7 comportant des micro-/nanoparticules 4 de graphène et des nanotubes de carbone.

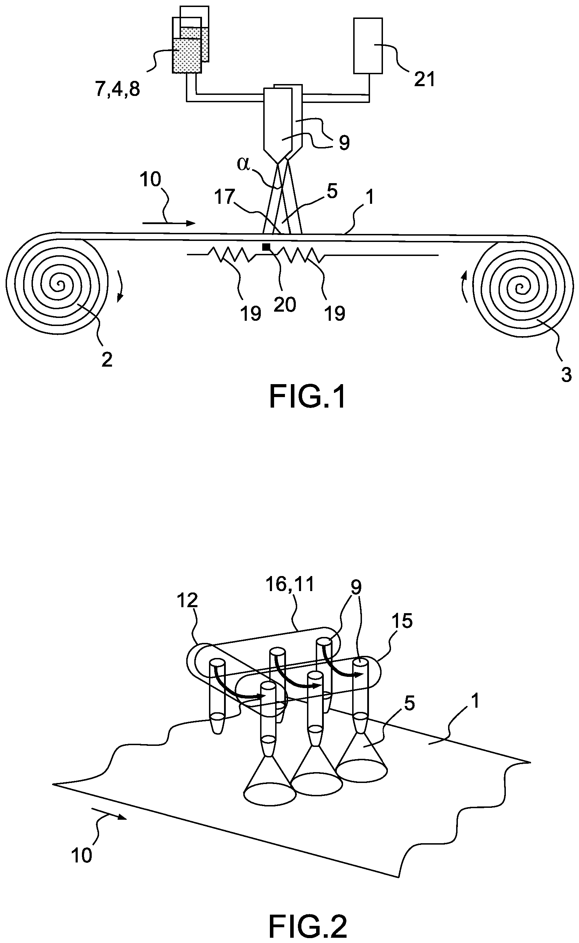

La figure 1 est une représentation schématique d'un système adapté à la réalisation d'un supercondensateur suivant un procédé conforme à l'invention.

Le substrat flexible 1 est enroulé en un premier rouleau 2 avant toute étape de fabrication. Il est déroulé pendant la fabrication d'un supercondensateur. De cette manière, des éléments, ou parties de substrat flexible 1 sont transportés au moins dudit premier rouleau 2 à une zone de dépôt 5. Dans des modes de réalisation de l'invention, ce transport peut être indirect : le premier rouleau 2 peut être déroulé, des parties de substrat flexible 1 passant successivement sur la surface d'autres rouleaux ou cylindres, avant d'arriver dans une zone de dépôt 5.

Le transport au travers de la zone de dépôt 5 de micro-/nanoparticules 4 est effectué selon un sens de transport 10 du substrat flexible 1 dans la zone d'impact 17.

Avantageusement, l'appareil comporte dans un mode de réalisation de l'invention un second rouleau 3. Ce second rouleau 3 permet d'enrouler le substrat flexible 1 après dépôt de micro-/nanoparticules 4. Dans des variantes, le substrat flexible 1 peut passer par d'autres rouleaux ou cylindres avant d'être enroulé autour du second rouleau 3.

L'appareil comprend une pluralité de buses 9, un réservoir contenant une suspension 7 de nano-/microparticules 4, suspendues dans un solvant 8, et une source de gaz 21. Dans des modes de réalisation de l'invention, les nano-/microparticules 4 peuvent être des particules de graphène, des nanotubes de carbone, des nanofils de carbone, des nanotiges de carbone, des nanocornes de carbone, des oignons de carbone, des particules de graphène oxydées, des nanotubes de carbone oxydés, des nanofils de carbone oxydés, des nanotiges de carbone oxydés, des nanocornes de carbone oxydés et des oignons de carbone oxydés. D'autres micro-/nanoparticules 4 sont envisageables.

Avantageusement, on oxyde au moins une dite nano-/microparticule avant de la suspendre dans un solvant 8. L'oxydation peut être réalisée par voie humide avec au moins un élément choisi parmi de l'acide sulfurique, de l'acide phosphorique, du nitrate de sodium, de l'acide nitrique, du permanganate de potassium et du peroxyde d'hydrogène. Les nano-/microparticules carbonées oxydées sont par exemple des SWCNT. Pour les obtenir à partir de SWCNT, on disperse des SWCNT dans un mélange à volume égal d'acide sulfurique et d'acide nitrique, pendant 30 minutes. Le mélange est ensuite mis à reflux pendant 3 heures. On peut les récupérer en filtrant sous vide le mélange et en les lavant avec plusieurs centaines de millilitres d'eau jusqu'à l'obtention d'un pH neutre du filtrat. Le produit est séché sous vide à 70°C pendant plusieurs jours. Les particules d'oxyde de graphène peuvent être obtenues commercialement.

Le solvant 8 utilisé pour la suspension peut être choisi parmi l'eau (H₂O), le méthanol (CH₄O), l'éthanol (C₂H₆O), le chlorure d'éthylène (DCE), la dichlorobenzidine (DCB), la N-méthyl-2-pyrrolidone (NMP), diméthylformamide (DMF), l'hexamethylphosphoramide (HMPA), la cyclopentanone (C₅H₈0), le tetramethylène sulfoxide (TMSO), l'ε-caprolactone, le 1,2-dichlorobenzène, le 1,2-dimethylbenzène, le bromobenzène, le iodobenzène et toluène. Dans des modes de réalisation de l'invention, on utilise un ou plusieurs solvants 8 choisis parmi méthanol (CH₄O), l'éthanol (C₂H₆O), le chlorure d'éthylène (DCE), la dichlorobenzidine (DCB), la N-méthyl-2-pyrrolidone (NMP), diméthylformamide (DMF), l'hexamethylphosphoramide (HMPA), la cyclopentanone (C₅H₈0), le tetramethylène sulfoxide (TMSO), l'ε-caprolactone, le 1,2-dichlorobenzène, le 1,2-dimethylbenzène, le bromobenzène, le iodobenzène et toluène. D'autres composés sont envisageables.

Le solvant 8 utilisé pour la suspension peut être avantageusement composé à plus de 95% d'eau (H₂O) et encore plus avantageusement composé à plus de 99% d'eau (H₂O). Dans des modes de réalisation de l'invention, l'eau peut être mélangée à d'autres solvants, dans des proportions qui leur permettent de rester miscibles à l'eau, tel que le méthanol (CH₄O), l'éthanol (C₂H₆O), le chlorure d'éthylène (DCE), la dichlorobenzidine (DCB), la N-méthyl-2-pyrrolidone (NMP), diméthylformamide (DMF), l'hexamethylphosphoramide (HMPA), la cyclopentanone (C₅H₈0), le tetramethylène sulfoxide (TMSO), l'ε-caprolactone, le 1,2-dichlorobenzène, le 1,2-dimethylbenzène, le bromobenzène, le iodobenzène et toluène. Dans des modes de réalisation de l'invention, on utilise un ou plusieurs solvants 8 choisis parmi méthanol (CH₄O), l'éthanol (C₂H₆O), le chlorure d'éthylène (DCE), la dichlorobenzidine (DCB), la N-méthyl-2-pyrrolidone (NMP), diméthylformamide (DMF), l'hexamethylphosphoramide (HMPA), la cyclopentanone (C₅H₈O), le tetramethylène sulfoxide (TMSO), l'ε-caprolactone, le 1,2-dichlorobenzène, le 1,2-dimethylbenzène, le bromobenzène, le iodobenzène et toluène. D'autres composés sont envisageables. L'utilisation de l'eau comme solvant permet de résoudre le problème technique de l'utilisation de solvant toxique de manière industrielle. Elle est avantageusement combinée à l'utilisation de micro-/nanoparticules 4 oxydées lors de la suspension, car les micro-/nanoparticules 4 carbonées non oxydées ont une très faible capacité à être suspendues dans un solvant aqueux.

Le gaz de pulvérisation est par exemple de l'air. Dans d'autres modes de réalisation, le gaz est un gaz inerte, par exemple de l'argon.

Chaque buse 9 est alimentée en suspension par un ou plusieurs réservoirs, chaque réservoir comportant une suspension 7, et alimentée en gaz de pulvérisation à partir de la source de gaz 21. La buse 9 est adaptée à pulvériser la suspension 7, alimentée à basse pression, en microgouttes en utilisant le gaz alimenté à haute pression. La buse 9 est du type aérographe. Les gouttes ou microgouttes sont créées par instabilité hydrodynamique entre la phase liquide, la phase gazeuse et la buse 9 : elles peuvent être pulvérisées par effet de la pression imposée à l'eau, à l'air et à la géométrie de la buse 9.

Dans une réalisation particulière de l'invention, le système comprend au moins un moyen de chauffage 19 du substrat flexible 1. Ce moyen de chauffage 19 peut être réalisé par un ou plusieurs éléments résistifs, reliés à un circuit d'alimentation électrique (non représenté) de sorte que le ou les éléments résistifs émettent de la chaleur par effet Joule lorsqu'ils sont traversés par un courant électrique. En variante ou en combinaison, l'appareil comprend des moyens de chauffage 19 par induction, comprenant par exemple une plaque à proximité du substrat flexible 1, comportant des inducteurs aptes à induire des courants électriques dans la plaque et générer de la chaleur. En variante ou en combinaison, l'appareil comprend des moyens de chauffage 19 par émission de rayons infrarouges dans la direction du substrat.

L'appareil comprend un moyen de mesure de température 20 disposé de façon à mesurer la température du substrat flexible 1.

En fonctionnement, la buse 9 génère un jet de pulvérisation formé de microgouttes de suspension 7 projetées en direction de la surface à recouvrir du substrat flexible 1. Le jet de pulvérisation forme une zone de dépôt 5 et atteint la surface du substrat flexible 1 à recouvrir dans une zone d'impact 17 dont la forme et les dimensions dépendent en particulier de la géométrie de la buse 9, du réglage de la buse 9 et de la position de la buse 9 par rapport au substrat flexible 1 à recouvrir.

La forme et les dimensions de la zone d'impact 17 dépendent notamment de l'angle α au sommet du cône formé par le jet de pulvérisation en sortie de la buse 9 et de la distance entre la sortie de la buse 9 et la surface du substrat flexible 1. Elles dépendent également de la pression du gaz de pulvérisation (liée au débit de gaz de pulvérisation) imposée par la source de gaz 21 et du débit d'écoulement de chaque suspension 7.

Le jet de pulvérisation est par exemple conique de révolution, de sorte qu'il forme une zone d'impact 17 de forme générale circulaire. En variante, le jet de pulvérisation pourrait définir une zone d'impact 17 oblongue, plus allongée dans une première direction que dans une deuxième direction perpendiculaire à la première. Cette variante correspond à une valeur de α variable dans le jet de pulvérisation.

Plusieurs buses 9 permettent le dépôt de plusieurs suspensions 7 de micro-/nanoparticules 4. La figure 1 représente un mode de réalisation de l'invention dans lequel deux buses 9 sont agencées côte à côte selon une direction perpendiculaire à la coupe de l'appareil illustrée dans la figure 1, et représentée schématiquement décalées pour la compréhension de la figure 1. Dans des modes de réalisation de l'invention, au moins deux suspensions 7 sont chacune reliées à des buses 9 différentes. Dans des variantes, une suspension 7 peut alimenter plusieurs buses 9, une buse 9 peut être alimentée par plusieurs suspensions 7 et plusieurs buses 9 peuvent être alimentées par plusieurs suspensions 7.

La figure 2 illustre schématiquement un agencement de buses 9 utilisé lors de la mise en œuvre d'un procédé selon l'invention. Dans un mode de réalisation de l'invention, le procédé de fabrication du supercondensateur comporte une étape consistant à échanger la position d'au moins une buse 9 avec une autre buse 9. Dans une variante, cette étape consiste à échanger la position de chacune des buses 9 d'un premier groupe 15 de buses 9 avec la position de chacune des buses 9 d'un second groupe 16 de buses 9. Dans un mode de réalisation, illustré dans la figure 2, un premier groupe 15 et un second groupe 16 comportent chacun trois buses 9. Après un dépôt de micro-/nanoparticules 4 par pulvérisation, réalisé par premier groupe 15, les buses 9 du premier groupe 15 sont déplacées et/puis les buses du second groupe 16 prennent leurs positions. Le déplacement des buses 9 du second groupe 16 est illustré par trois flèches courbes noires. Le déplacement des buses 9 du second groupe 16 peut être concomitant ou ultérieur au déplacement des buses 9 du premier groupe 15.

Cette caractéristique de l'invention permet de réaliser des couches par dépôts successifs de différentes suspensions 7 pulvérisées. Les suspensions connectées au premier groupe 15 et au second groupe 16 peuvent comporter des micro-/nanoparticules 4 différentes et/ou des compositions en micro-/nanoparticules 4 différentes.

Dans un mode de réalisation dans lequel la position de buses 9 est échangée, différentes vitesses de transport peuvent être imposées au substrat flexible 1, par exemple par un moyen d'entrainement d'un rouleau. Le substrat flexible 1 est par exemple déplacé avec une vitesse variable : il peut être statique lors des dépôts successifs par le premier groupe 15 et par le second groupe 16, puis être déplacé pour présenter au premier groupe 15 et second groupe 16 une zone de substrat flexible 1 sans dépôt effectué. Dans une variante, le substrat flexible 1 est transporté à une vitesse constante. Préférentiellement, cette vitesse est faible devant la vitesse de déplacement et/ou de dépôt, de manière à ce que la zone d'impact 17 coïncide sensiblement avec les mêmes parties du substrat flexible 1. Dans des variantes, différents profils de vitesse du substrat flexible 1 peuvent être réalisés pour correspondre à un profil de dépôt donné.

Dans une variante, le substrat flexible 1 est localement plan dans la zone d'impact 17, suivant un plan principal et au moins trois buses 9 sont agencées dans un plan parallèle et différent du plan principal. Contrairement au mode de réalisation précédent, les différentes buses 9 peuvent être statiques. Une buse 9 permet lors d'une pulvérisation statique (substrat flexible 1 statique et buse 9 statique) de réaliser un dépôt de micro-/nanoparticules 4 dont la densité surfacique dans le plan possède une allure gaussienne. Dans des modes de réalisation de l'invention, la répartition de plusieurs buses 9 dans un plan parallèle au plan principal du substrat flexible 1 permet de recouvrir une surface contrôlée avec une densité de surface en micro-/nanoparticules 4 contrôlée sur l'ensemble de cette surface, et notamment en fonction de l'agencement des buses 9 et de l'espacement entre-elles des buses 9.

Dans un mode de réalisation de l'invention, les buses 9 sont agencées selon une matrice comportant des lignes 11 et des colonnes 12, les lignes 11 étant sensiblement transversales au sens de transport 10 du substrat flexible 1. L'agencement des buses 9 en matrice est adapté à recouvrir une surface de substrat flexible 1 de micro-/nanoparticules 4 de manière homogène ou sensiblement homogène. Dans une réalisation de l'invention, au moins une ligne 11 pulvérise des suspensions 7 de même composition en micro-/nanoparticules 4, et de composition différente d'au moins une autre ligne. Typiquement, les différentes lignes 11 peuvent être reliées à des suspensions 7 différentes. Cet agencement est adapté à produire de manière continue (par exemple avec une vitesse de déplacement du substrat flexible 1 constante) un matériau comportant des couches de micro-/nanoparticules 4 multiples, et/ou de composition en micro-/nanoparticules 4 différentes. Dans un mode de réalisation de l'invention, la composition en micro-/nanoparticules 4 des suspensions 7 des différentes lignes 11 est périodique. Cette caractéristique peut permettre de réaliser un dépôt de couches homogènes ou pseudo homogènes en mélangeant les gouttes pulvérisées par les buses 9 proche de la surface.

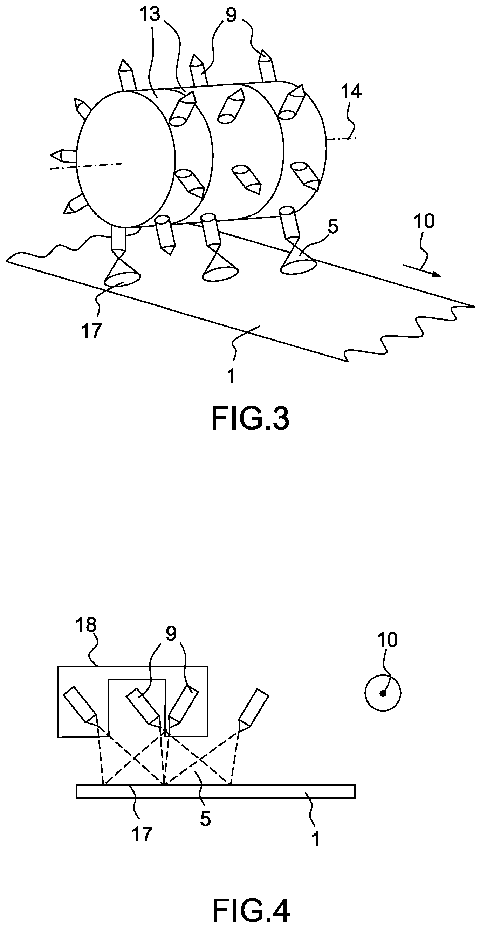

La figure 3 illustre schématiquement l'agencement de buses 9 autour de manèges 13, dans la mise en œuvre d'un procédé selon l'invention. Dans ce mode de réalisation, le substrat flexible 1 peut être localement plan, suivant un plan principal, et des buses 9 sont agencées autour d'au moins un manège 13. La figure 3 illustre par exemple un système comportant trois manèges 13. Dans ce mode de réalisation de l'invention, un axe de révolution 14 est commun à l'ensemble des manèges 13. Par manège, on entend une structure solide, adaptée à être liée à un guide suivant l'axe de révolution 14 par une liaison pivot, et apte à supporter différentes buses 9, liées au manège 13. Les buses 9 peuvent être liées de manière solidaire à un manège 13 comme l'illustre la figure 3. Dans une variante, la liaison entre une buse 9 et le manège 13 peut être apte à garder l'orientation d'une buse constante lors de la rotation du manège autour de l'axe de révolution 14. Dans un mode de réalisation de l'invention, un manège peut être apte à relier des suspensions 7 de micro-/nanoparticules 4 différentes et/ou de compositions en micro-/nanoparticules 4 différentes aux buses supportées par un manège 13.

La figure 4 illustre schématiquement la pulvérisation d'une suspension 7 par deux buses 9 sur sensiblement la même zone d'impact 17. Dans le procédé selon l'invention, un ensemble 18 de buses 9 comporte deux buses 9 pulvérisant simultanément une ou plusieurs suspensions 7 sensiblement sur la même zone d'impact 17 du substrat flexible 1. Dans des variantes, strictement plus de deux buses 9 peuvent pulvériser simultanément sensiblement la même zone d'impact 17. Lors de la projection d'une suspension par une buse 9, les gouttelettes de suspensions sont projetées dans un volume qui est défini par la zone de dépôt 5. On entend par axe de projection la trajectoire moyenne des gouttelettes projetées dans cette zone de dépôt 5. Deux buses 9 peuvent sensiblement pulvériser une suspension sur la même zone d'impact 17 si la largeur caractéristique d'une buse 9 est très petite devant le diamètre moyen d'une zone d'impact 17 et/ou si l'axe de projection des buses 9 est non colinéaire à l'axe de projection de la buse 9 pulvérisant une suspension sur sensiblement la même zone d'impact 17. Ces conditions sont généralisables pour un nombre de buses strictement supérieur à deux. La dernière méthode comporte l'avantage de modifier le profil de la densité surfacique de micro-/nanoparticules 4 déposées dans la zone d'impact 17. A la différence d'une distribution Gaussienne observée lors d'une pulvérisation avec une buse 9 unique en conditions statiques, la distribution en micro-/nanoparticules 4 lors d'une projection réalisée par plusieurs buses 9 comporte plusieurs extrema. L'ajustement de la position et de l'orientation des buses 9 d'un même ensemble 18 permet de positionner ces extrema et de déposer les micro-/nanoparticules 4 de manière pseudo-homogène sur la zone d'impact 17.

Dans un mode de réalisation dans lequel on pulvérise des suspensions 7 de même composition, on peut réaliser une couverture du substrat flexible 1 dont la densité surfacique en micro-/nanoparticules 4 est sensiblement homogène. Dans un mode de réalisation dans lequel les suspensions 7 comportent des compositions différentes, on peut réaliser une couverture du substrat flexible 1 dont la densité est Gaussienne dans le cas où la largeur caractéristique d'une buse 9 est très petite devant le diamètre moyen d'une zone d'impact 17. Dans le cas où les inclinaisons des axes de projection des buses d'un ensemble 18 sont différentes, on peut réaliser des gradients de densités surfaciques en micro-/nanoparticules 4. Cette dernière méthode peut permettre l'optimisation des supercondensateurs en réalisant des séries de supercondensateurs à composition en micro-/nanoparticules variables à partir d'un même substrat flexible comportant un gradient de densités en micro-/nanoparticules déposées, puis en choisissant celui dont les performances sont les plus adaptées à l'application industrielle choisie. Dans un mode de réalisation de l'invention illustré sur la figure 4, on peut agencer plusieurs ensembles 18 de manière à ce que les différentes zones d'impact 17 soient adjacentes sur le substrat flexible 1.

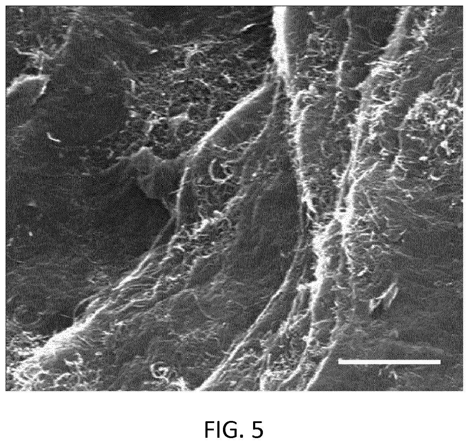

La figure 5 est une photographie obtenue par un microscope électronique à balayage de la structure du matériau d'un dépôt réalisé avec une suspension 7 comportant des micro-/nanoparticules 4 de graphène et des nanotubes de carbone. La figure 5 illustre la structure hiérarchisée obtenue par la mise en œuvre d'un procédé selon l'invention : les nanotubes de carbones oxydés s'intercalent entre les feuillets de graphène oxydés. La répartition homogène des deux structures peut être déjà potentiellement initiée dans la suspension avant pulvérisation, via de possibles estérifications entre les groupements hydroxyles et carboxyliques de chacune des deux structures carbonées oxydées. Dans une réalisation particulière de l'invention, d'autres structures carbonées oxydées peuvent être introduites dans les suspensions 9 pulvérisées, telles que des nanofils de carbone, des nanotiges de carbone, des nanocornes de carbone et des oignons de carbone. La barre d'échelle représente 100 nanomètres.

Avantageusement, un procédé selon l'invention comporte une étape dans laquelle on oxyde des micro-/nanoparticules 4 avant de les pulvériser, ou avant de les suspendre dans le solvant 8, et une étape dans laquelle on recuit le dépôt après pulvérisation à une température suffisante pour désoxyder les micro-/nanoparticules 4. Le dépôt est par exemple recuit à une température supérieure à 200°C. Cette température permet de réduire ou désoxyder les micro-/nanoparticules 4 déposées, comme l'oxyde de graphène et les nanotubes oxydés, et augmenter la conductivité du dépôt de nano-/microparticules 4. Cette étape est particulièrement avantageuse lors d'une température de dépôt trop faible pour réduire ou désoxyder les nano-/microparticules 4, par exemple lors de l'utilisation de l'eau comme solvant des micro-/nanoparticules 4. Cette mise en œuvre du procédé selon l'invention comporte deux avantages distincts : d'une part le recuit permet de désoxyder les nano-/microparticules 4 à une température efficace tout en gardant une température plus basse pendant la pulvérisation (et les avantages qui y sont liés, tel que l'utilisation de l'eau comme solvant 8). D'autre part le recuit peut se faire de manière contrôlée, en imposant par exemple un temps de recuit égal pour l'ensemble des particules déposées. Le recuit peut être réalisé par un ou des moyens similaires aux moyens de chauffage 19 : par un ou plusieurs éléments résistifs, reliés à un circuit d'alimentation électrique (non représenté) de sorte que le ou les éléments résistifs émettent de la chaleur par effet Joule lorsqu'ils sont traversés par un courant électrique. En variante ou en combinaison, le système comprend des moyens de recuit par induction, comprenant par exemple une plaque à proximité du substrat flexible 1, comportant des inducteurs aptes à induire des courants électriques dans la plaque et générer de la chaleur.

## Revendications

1. Procédé de fabrication d'un supercondensateur comprenant un substrat flexible (1), ledit procédé comprenant au moins les étapes consistant à :
• dérouler ledit substrat flexible (1) d'un premier rouleau (2) ;
• pulvériser une pluralité de suspensions (7) comprenant des micro-/nanoparticules (4) suspendues dans un solvant (8), lesdites suspensions (7) étant pulvérisées par une pluralité de buses (9) formant des jets de gouttes de dites suspension (7) définissant une zone d'espace, dite zone de dépôt (5), la composition en dites micro-/nanoparticules (4) d'une dite suspension (7) pulvérisée est différente de la composition en dite micro-/nanoparticules (4) d'au moins une autre dite suspension (7) pulvérisée, ;
• transporter au moins une partie dudit substrat flexible (1) au travers d'une zone de dépôt (5) de micro-/nanoparticules (4), selon une direction de transport (10) dudit substrat flexible (1), l'interaction de ladite zone de dépôt (5) et dudit substrat flexible (1) formant une zone d'impact (17) ;
• chauffer ledit substrat flexible (1), pendant chaque pulvérisation, de manière à promouvoir l'évaporation complète dudit solvant (8) desdites suspensions (7) pulvérisées sur ledit substrat flexible (1) ;
ledit procédé étant **caractérisé en ce qu'**un ensemble (18) d'au moins deux buses (9) pulvérise simultanément au moins deux suspensions (7) sur la même zone d'impact (17).

2. Procédé selon la revendication précédente comportant une étape additionnelle consistant à enrouler ledit substrat flexible (1) autour d'un second rouleau (3).

3. Procédé selon l'une des revendications précédentes comportant au moins une étape consistant à échanger la position de chacune desdites buses (9) d'un premier groupe de dites buses (9) avec la position de chacune desdites buses (9) d'un second groupe de dites buses (9).

4. Procédé selon l'une des revendications précédentes dans lequel ledit substrat flexible (1) est localement plan dans ladite zone d'impact (17), suivant un plan principal, et dans lequel au moins trois dites buses (9) sont agencées dans un plan parallèle et différent dudit plan principal.

5. Procédé selon la revendication précédente dans lequel l'ensemble desdites buses sont agencées selon une matrice, comportant des lignes (11) et des colonnes (12), ladite zone d'impact (17) d'une dite ligne (11) étant sensiblement transversale à la direction de transport (10) dudit substrat flexible (1).

6. Procédé selon la revendication précédente dans lequel au moins une dite ligne (11) pulvérise desdites suspensions (7) de même composition en dites micro-/nanoparticules (4), et de composition différente d'au moins une autre dite ligne (11).

7. Procédé selon la revendication précédente dans lequel la composition en dites micro-/nanoparticules (4) desdites suspensions (7) est périodique en fonction desdites lignes (11).

8. Procédé selon l'une des revendications précédentes dans lequel ledit substrat flexible (1) est plan, suivant un plan principal, et lesdites buses (9) sont agencées autour d'au moins un manège (13), un axe de révolution (14) étant commun à chacun des dits manèges (13), ledit axe de révolution (14) étant sensiblement parallèle audit plan principal et sensiblement normal à ladite direction de transport (10) dudit substrat flexible (1), ledit procédé comprenant au moins une étape consistant à pivoter au moins un dit manège (13) autour dudit axe de révolution (14).

9. Procédé selon l'une des revendications précédentes dans lequel deux dites buses (9) dudit ensemble (18) pulvérisent des dites suspensions (7) de micro-/nanoparticules (4) de même composition en micro-/nanoparticules (4) et en solvant (8) selon un angle différent, recouvrant sensiblement la même dite zone d'impact (17) de manière sensiblement homogène.

10. Procédé selon l'une des revendications précédentes comportant une étape additionnelle dans laquelle on chauffe ledit substrat flexible (1), pendant chaque pulvérisation, de manière à promouvoir l'évaporation complète dudit ou desdits solvant (8) desdites suspensions (7) pulvérisées sur ledit substrat flexible (1) à une température inférieure ou égale à une fois et demie la température d'ébullition de chaque dit solvant (8) et inférieure ou égale à 200 degrés Celsius ;

11. Procédé selon l'une des revendications précédentes dans lequel lesdites micro-/nanoparticules (4) comprennent des feuilles de graphène.

12. Procédé selon l'une des revendications précédentes dans lequel on oxyde au moins une partie des micro-/nanoparticules (4) avant de les suspendre dans un dit solvant (8).

13. Procédé selon l'une des revendications précédentes dans lequel on suspend, avant une pulvérisation, lesdites micro-/nanoparticules (4) dans un dit solvant composé à plus de 95% d'eau (H₂O) en masse et préférentiellement à plus de 99% d'eau en masse.

14. Procédé selon l'une des revendications précédentes dont lesdites micro-/nanoparticules (4) sont choisies parmi des nanotubes de carbone, des nanofils de carbone, des nanotiges de carbone, des nanocornes de carbone, des oignons de carbone et un mélange de ces micro-/nanoparticules (4), dans lequel on oxyde lesdites micro-/nanoparticules avant de les pulvériser et dans lequel on recuit ledit dépôt après ladite pulvérisation à une température suffisante pour désoxyder lesdites micro-/nanoparticules (4).

15. Procédé selon l'une des revendications précédentes dans lequel on mesure l'épaisseur de dites micro-/nanoparticules (4) déposées pendant ou après le dépôt de dites micro-/nanoparticules (4).

16. Electrode comprenant un dit substrat flexible (1), ledit substrat flexible (1) étant recouvert d'un dépôt de micro-/nanoparticules (4), ledit dépôt de dites nano-/microparticules (1) étant obtenu par un procédé selon l'une des revendications précédentes.

17. Supercondensateur comportant au moins une dite électrode selon la revendication précédente.

## Patentansprüche

1. Verfahren zur Herstellung eines Superkondensators, der ein flexibles Substrat (1) umfasst, wobei das Verfahren mindestens die folgenden Schritte umfasst:
• Abrollen des flexiblen Substrats (1) von einer ersten Rolle (2);
• Sprühen einer Vielzahl von Suspensionen (7), die in einem Lösungsmittel (8) suspendierte Mikro-/Nanopartikel (4) umfassen, wobei die Suspensionen (7) durch eine Vielzahl von Düsen (9) versprüht werden, die Strahlen von Tropfen der Suspension (7) bilden, die eine Ablagerungszone (5) genannte Raumzone definieren, wobei sich die Zusammensetzung der Mikro-/Nanopartikel (4) einer versprühten Suspension (7) von der Zusammensetzung der Mikro-/Nanopartikel (4) mindestens einer anderen versprühten Suspension (7) unterscheidet;
• Transportieren mindestens eines Teils des flexiblen Substrats (1) durch eine Ablagerungszone (5) von Mikro-/Nanopartikeln (4) entlang einer Transportrichtung (10) des flexiblen Substrats (1), wobei die Wechselwirkung der Ablagerungszone (5) und des flexiblen Substrats (1) eine Aufprallzone (17) bildet;
• Erwärmen des flexiblen Substrats (1) während jedes Sprühens, um die vollständige Verdampfung des Lösungsmittels (8) der auf das flexible Substrat (1) gesprühten Suspensionen (7) zu fördern;
wobei das Verfahren **dadurch gekennzeichnet ist, dass** ein Satz (18) von mindestens zwei Düsen (9) gleichzeitig mindestens zwei Suspensionen (7) auf dieselbe Aufprallzone (17) sprüht.

2. Verfahren nach dem vorherigen Anspruch, das einen zusätzlichen Schritt des Rollens des flexiblen Substrats (1) um eine zweite Rolle (3) umfasst.

3. Verfahren nach einem der vorherigen Ansprüche, das mindestens einen Schritt des Austauschens der Position jeder der Düsen (9) einer ersten Gruppe der Düsen (9) mit der Position jeder der Düsen (9) einer zweiten Gruppe der Düsen (9) umfasst.

4. Verfahren nach einem der vorherigen Ansprüche, wobei das flexible Substrat (1) in der Aufprallzone (17) entlang einer Hauptebene lokal planar ist und wobei mindestens drei der Düsen (9) in einer Ebene angeordnet sind, die parallel zur Hauptebene verläuft und sich von dieser unterscheidet.

5. Verfahren nach dem vorherigen Anspruch, wobei der Satz der Düsen in einer Matrix mit Reihen (11) und Spalten (12) angeordnet sind, wobei die Aufprallzone (17) einer Reihe (11) im Wesentlichen quer zur Transportrichtung (10) des flexiblen Substrats (1) verläuft.

6. Verfahren nach dem vorherigen Anspruch, wobei mindestens eine Reihe (11) die Suspensionen (7) mit der gleichen Zusammensetzung in Mikro-/Nanopartikel (4) und mit einer anderen Zusammensetzung aus mindestens einer anderen Reihe (11) versprüht.

7. Verfahren nach dem vorherigen Anspruch, wobei die Zusammensetzung der Mikro-/Nanopartikel (4) der Suspensionen (7) periodisch gemäß den Reihen (11) ist.

8. Verfahren nach einem der vorherigen Ansprüche, wobei das flexible Substrat (1) entlang einer Hauptebene planar ist und die Düsen (9) um mindestens eine Trommel (13) herum angeordnet sind, wobei allen Trommeln (13) eine Drehachse (14) gemeinsam ist, die im Wesentlichen parallel zur Hauptebene und im Wesentlichen normal zur Transportrichtung (10) des flexiblen Substrats (1) verläuft, wobei das Verfahren mindestens einen Schritt umfasst, der darin besteht, mindestens eine der Trommeln (13) um die Drehachse (14) zu schwenken.

9. Verfahren nach einem der vorherigen Ansprüche, wobei zwei der Düsen (9) des Satzes (18) die Suspensionen (7) von Mikro-/Nanopartikeln (4) mit der gleichen Zusammensetzung von Mikro-/Nanopartikeln (4) und Lösungsmittel (8) unter einem unterschiedlichen Winkel sprühen, wodurch diese im Wesentlichen die gleiche Aufprallzone (17) im Wesentlichen homogen abdecken.

10. Verfahren nach einem der vorherigen Ansprüche, das einen zusätzlichen Schritt umfasst, bei dem das flexible Substrat (1) bei jedem Sprühen erwärmt wird, um die vollständige Verdampfung des/der Lösungsmittel(s) (8) der auf das flexible Substrat (1) gesprühten Suspensionen (7) bei einer Temperatur zu fördern, die gleich dem oder niedriger als das Eineinhalbfache(n) der Siedetemperatur jedes der Lösungsmittel (8) und gleich oder niedriger als 200 Grad Celsius ist.

11. Verfahren nach einem der vorherigen Ansprüche, wobei die Mikro-/Nanopartikel (4) Graphenblätter umfassen.

12. Verfahren nach einem der vorherigen Ansprüche, wobei mindestens ein Teil der Mikro-/Nanopartikel (4) vor dem Suspendieren in einem Lösungsmittel (8) oxidiert wird.

13. Verfahren nach einem der vorherigen Ansprüche, wobei die Mikro-/Nanopartikel (4) vor dem Versprühen in einem Lösungsmittel suspendiert werden, das zu mehr als 95 Masse-% aus Wasser (H₂O) und vorzugsweise zu mehr als 99 Masse-% aus Wasser besteht.

14. Verfahren nach einem der vorherigen Ansprüche, wobei dessen Mikro-/Nanopartikel (4) ausgewählt sind aus Kohlenstoff-Nanoröhren, Kohlenstoff-Nanodrähten, Kohlenstoff-Nanostäbchen, Kohlenstoff-Nanokömern, Kohlenstoff-Zwiebeln und einer Mischung dieser Mikro-/Nanopartikel (4), wobei die Mikro-/Nanopartikel vor dem Versprühen oxidiert werden und wobei die Ablagerung nach dem Versprühen bei einer Temperatur geglüht wird, die ausreicht, um die Mikro-/Nanopartikel (4) zu desoxidieren.

15. Verfahren nach einem der vorherigen Ansprüche, wobei die Dicke der abgeschiedenen Mikro-/Nanopartikel (4) während oder nach dem Ablagern der Mikro-/Nanopartikel (4) gemessen wird.

16. Elektrode, die ein flexibles Substrat (1) umfasst, wobei das flexible Substrat (1) mit einer Ablagerung von Mikro-/Nanopartikeln (4) beschichtet ist, wobei die Ablagerung der Nano-/Mikropartikel (1) durch ein Verfahren nach einem der vorherigen Ansprüche erhalten wird.

17. Superkondensator, der mindestens eine Elektrode nach dem vorherigen Anspruch umfasst.

## Claims

1. A process for producing a supercapacitor, comprising a flexible substrate (1), said process comprising at least the steps of:
• unrolling said flexible substrate (1) from a first roll (2);
• spraying a plurality of suspensions (7) comprising micro/nanoparticles (4) suspended in a solvent (8), said suspensions (7) being sprayed by a plurality of nozzles (9) forming jets of droplets of said suspension (7) defining a spatial region, referred to as deposition region (5), the composition of said micro/nanoparticles (4) of one said sprayed suspension (7) is different from the composition of said micro/nanoparticles (4) of at least one other said sprayed suspension (7);
• transporting at least one portion of said flexible substrate (1) through a region (5) for deposition of micro/nanoparticles (4), along a direction of transport (10) of said flexible substrate (1), the interaction of said deposition region (5) and of said flexible substrate (1) forming an impact region (17);
• heating said flexible substrate (1), during each spraying operation, so as to encourage the complete evaporation of said solvent (8) from said suspensions (7) sprayed onto said flexible substrate (1);
said process being **characterized in that** an assembly (18) of at least two nozzles (9) simultaneously sprays at least two suspensions (7) substantially over the same impact region (17).

2. The process according to the preceding claim, comprising an additional step of winding said flexible substrate (1) around a second roll (3).

3. The process according to one of the preceding claims, comprising at least one step of exchanging the position of each of said nozzles (9) from a first group of said nozzles (9) with the position of each of said nozzles (9) from a second group of said nozzles (9).

4. The process according to one of the preceding claims, wherein said flexible substrate (1) is locally planar in said impact region (17) along a main plane, and wherein at least three of said nozzles (9) are arranged in a plane that is parallel to, and different from, said main plane.

5. The process according to the preceding claim, wherein the assembly of said nozzles are arranged according to a matrix having rows (11) and columns (12), said impact region (17) of one said row (11) being substantially transverse to the direction of transport (10) of said flexible substrate (1).

6. The process according to the preceding claim, wherein at least one said row (11) sprays said suspensions (7) with a same composition into micro/nanoparticles (4) and with a composition that is different from at least one other said row (11).

7. The process according to the preceding claim, wherein the composition of said micro/nanoparticles (4) of said suspensions (7) is periodical as a function of said rows (11).

8. The process according to one of the preceding claims, wherein said flexible substrate (1) is planar along a main plane and said nozzles (9) are arranged around at least one carousel (13), one axis of revolution (14) being common to each of said carousels (13), said axis of revolution (14) being substantially parallel to said main plane and substantially normal to said direction of transport (10) of said flexible substrate (1), said process comprising at least one step of pivoting at least one said carousel (13) about said axis of revolution (14).

9. The process according to one of the preceding claims, wherein two said nozzles (9) of said assembly (18) spray said suspensions (7) of micro/nanoparticles (4) with the same composition of micro/nanoparticles (4) and of solvent (8) at a different angle, substantially covering the same said impact region (17) substantially homogeneously.

10. The process according to one of the preceding claims, comprising an additional step wherein said flexible substrate (1) is heated during each spraying operation, so as to encourage the complete evaporation of said solvent(s) (8) from said suspensions (7) sprayed onto said flexible substrate (1), to a temperature less than or equal to one and a half times the boiling point of each said solvent (8) and less than or equal to 200 degrees Celsius.

11. The process according to one of the preceding claims, wherein said micro/nanoparticles (4) comprise graphene sheets.

12. The process according to one of the preceding claims, wherein at least a portion of the micro/nanoparticles (4) is oxidized before they are suspended in a said solvent (8).

13. The process according to one of the preceding claims, wherein, before a spraying operation, said micro/nanoparticles (4) are suspended in a said solvent composed of more than 95% water (H₂O) by weight, and preferentially more than 99% water by weight.

14. The process according to one of the preceding claims, said micro/nanoparticles (4) of which are selected from carbon nanotubes, carbon nanofibers, carbon nanorods, carbon nanohorns, carbon onions and a mixture of these micro/nanoparticles (4), wherein said micro/nanoparticles are oxidized before they are sprayed, and wherein said deposit is annealed after said spraying operation at a sufficient temperature to deoxidize said micro/nanoparticles (4).

15. The process according to one of the preceding claims, wherein the thickness of said micro/nanoparticles (4) deposited is measured during or after the deposition of said micro/nanoparticles (4).

16. An electrode comprising a said flexible substrate (1), said flexible substrate (1) being covered with a deposit of micro/nanoparticles (4), said deposition of said micro/nanoparticles (1) being able to be obtained by a process according to one of the preceding claims.

17. A supercapacitor comprising at least one said electrode according to the preceding claim.
